# EUROPÄISCHE PATENTANMELDUNG

(11) **EP 0 905 392 A2**
(43) Veröffentlichungstag der Anmeldung: **31.03.1999**
(21) Anmeldenummer: 98116063.3
(22) Anmeldetag: 26.08.1998
(51) Int. Cl.: F16B 41/00

(54) **Befestigungselement**

(30) Priorität: 13.09.1997 DE 19740320; 25.07.1998 DE 19833606
(71) Anmelder: Voges, Karsten, 60316 Frankfurt am Main (DE)
(72) Erfinder: Voges, Karsten, 60316 Frankfurt am Main (DE)
(74) Vertreter: Jochem, Bernd, Dipl.-Wirtsch.-Ing.

(57) **Zusammenfassung**

Das Befestigungselement hat einen Gewindeteil (3) und davor einen Trägerteil (4) mit einem elastischen Element (5). Der Trägerteil (4) kann aus anderem Material, z.B. einem elastischen Kunststoff, als der Gewindeteil (3) bestehen und fest oder, z.B. durch eine Schraub- oder Rastverbindung, lösbar mit diesem verbunden sein. Das elastische Element (5) läßt sich vor dem Gewindeteil (3) mit dem Gegengewinde (6) oder an anderer Stelle in Reibungs- oder Rasteingriff bringen, indem am Anfang eines Montagevorgangs einfach nur die beiden zu verschraubenden Teile (1, 6) axial ineinandergesteckt werden. Die radial äußeren Enden der das elastische Element bildenden Federzungen (5) können auf einer Schraubenlinie in Verlängerung des Gewindegangs des Gewindeteils (3) liegen.

## Beschreibung

Die Erfindung betrifft ein Befestigungselement mit einem ein vorderes und ein hinteres axiales Ende aufweisenden Gewindeteil und wenigstens einem ein Trägerteil bildenden Abschnitt, an dem wenigstens ein sich radial mindestens in den radialen Bereich des Gewindes erstreckendes elastisches Element angebracht ist.

Derartige Befestigungselemente sind aus den deutschen Gebrauchsmustern 1 997 148 und 76 36 365 bekannt. Es handelt sich um sog. unverlierbare Schrauben, die durch ein Loch in einem Bauteil hindurchzustecken sind und dagegen gesichert werden sollen, daß sie nach Verlust der zugehörigen Mutter aus dem Loch fallen und verloren gehen. Das elastische Element ist hinter dem hinteren Ende des Gewindeteils angeordnet, wirkt also nicht mit der zugehörigen Mutter, sondern mit dem Loch im Bauteil zusammen.

Die Erfindung befaßt sich demgegenüber mit dem Montagevorgang bei der Herstellung einer Schraubverbindung. Als solche werden ganz allgemein Schrauben-, Gewindestift-, Schraubbolzenverbindungen und dgl. verstanden. Ebenso gehören hierzu Kombinationen und Mischformen der genannten Befestigungssysteme. Solche Gewinde-Befestigungssysteme sind in großem Umfang aus dem Stand der Technik bekannt und dienen der Befestigung oder Verbindung von Teilen mit anderen Teilen, wie z. B. der Verbindung von Anschlüssen, Flanschen o. dgl.

Im Sinne der vorliegenden Erfindung ist der Gewindeteil ein axialer Abschnitt des Befestigungselements mit wenigstens einem Außengewinde oder Innengewinde. Das Gewinde ist eine schraubenförmige Profilierung einer Mantelfläche an einem stift- oder bolzenförmigen Element oder in einer Bohrung bzw. Öffnung, z. B. einer Mutter. Die Gewinde können z. B. Trapez-, Säge-, Rund- oder Spitzgewinde sein oder einen beliebigen anderen Profilquerschnitt haben und zu Befestigungszwecken, der Kraft- und/oder Bewegungsübertragung dienen.

Ein Problem bei der Herstellung von Gewindeverbindungen besteht darin, daß das stiftförmige Befestigungselement, beispielsweise eine Schraube, aus der Öffnung, beispielsweise der Gewindebohrung, herausrutschen kann, solange nicht die ersten Gewindegänge in Eingriff gekommen sind. Dies ist besonders dann problematisch, wenn zur Herstellung einer Verbindung, Befestigung o. dgl. beide Hände zum Halten von Teilen benötigt werden, Werkzeuge zum Einsatz kommen, die Montage an schwer zugänglichen Stellen, mit besonders kleinen Befestigungselementen oder gegen die Schwerkraft erfolgt.

Der Erfindung liegt deshalb die Aufgabe zugrunde die Herstellung von Gewinde- bzw. Schraubverbindungen zu vereinfachen.

Vorstehende Aufgabe wird durch ein Befestigungselement mit einem Gewindeteil und einem Trägerteil eines elastischen Elements gelöst, bei dem das elastische Element vor dem vorderen Ende des Gewindeteils angeordnet ist.

Die Erfindung bietet den Vorteil, daß das bisher aus zwei Gewindeelementen, z. B. Schraube und Mutter oder Gewindebolzen und Gewindebohrung bestehende Endmontagesystem durch ein durch Trägerteil und elastisches Element gebildetes Vormontagesystem ergänzt ist. Die Kombination beider Systeme gestattet es, daß man am Anfang eines Montagevorgangs zunächst nur das elastische Element durch einen einfachen Steckvorgang, also ohne Drehbewegung und ohne Notwendigkeit, eine genau fluchtende Lage einhalten zu müssen, mit dem Gegengewinde bzw. dem dieses tragenden Teil in Eingriff bringt. Die Elastizität des elastischen Elements gestattet anfängliche Abweichungen von der bisher erforderlichen, genau zentrierten, fluchtenden Relativstellung, mit der die beiden zusammenwirkenden Gewindeteile in Eingriff gebracht werden mußten. Anschließend sorgt das allein durch axialen Druck in Eingriff mit dem Gegengewinde oder einem anderen Bereich eines mit dem Befestigungselement zu verbindenden Teils gebrachte elastische Element beispielsweise durch Reibung am Gegengewinde und/oder Einrasten in die Gewindegänge des Gegengewindes oder einen besonderen Eingriffsbereich für eine vorläufige Verbindung zwischen den zu befestigenden Teilen. Sie bietet dem Monteur Gelegenheit, umzugreifen und von Hand oder mittels eines Werkzeugs die vormontierten Teile nunmehr durch Ineinanderschrauben der Gewindeteile fertig zu montieren. Dabei können das elastische Element und der Trägerteil durch entsprechende Gestaltung als Zentrierhilfe dienen. Außerdem kann das elastische Element in Bezug auf das vordere Ende des Gewindeteils so angeordnet und gestaltet sein, daß es in der vormontierten Stellung eine axiale Spannung auf die miteinander verbundenen Teile ausübt, die sie in einer bestimmten axialen Relativstellung hält, in der z. B. die Gewinde axial zur Berührung kommen.

Es versteht sich, daß das Befestigungselement, welches im Ausgangszustand über den Trägerteil mit dem elastischen Element verbunden ist, sowohl das stift- bzw. bolzenförmige Element mit Außengewinde als auch die Mutter oder ein sonstiges Teil mit einer Bohrung mit Innengewinde sein kann.

Der Unterschied besteht darin, daß ein vor dem vorderen Ende eines Außengewindes angebrachtes elastisches Element im Querschnitt größer als der lichte Querschnitt der in Eingriff zu bringenden Öffnung ist und/oder am Anfang des Fügevorgangs radial zusammengedrückt wird, während dann, wenn das elastische Element vor dem vorderen Ende eines Innengewindes angebracht ist, der Querschnitt des elastischen Elements kleiner als der Außendurchmesser des in Eingriff zu bringenden Bolzenabschnitts ist und/oder am Anfang des Fügevorgangs eine radiale Aufweitung erfolgt. Der maximale Außendurchmesser bzw. minimale Innendurchmesser des elastischen Elements befinden sich dabei vor dem vorderen Ende des Gewindeabschnitts, an welchem das elastische Element angeordnet ist.

Je nach Montagesituation kann das elastische Element auch dazu benutzt werden, im Zusammenwirken mit anderen als Gewindeflächen einen Vormontagezustand zu sichern. So kann z. B. ein Gewindebolzen oder eine Schraube mit einem elastischen Element am vorderen Ende durch glattzylindrische Löcher in einem oder mehreren Bauteilen hindurchgesteckt werden und dank des elastischen Elements halten, bis anschließend eine Mutter ergriffen und aufgeschraubt wird.

Der Trägerteil - ein Abschnitt, welcher das elastische Element trägt - kann mehrere Vorteile haben. So ist er geeignet, das elastische Element in eine für die Vormontage günstige Position - z. B. zur Schaffung eines günstigen Abstands zwischen elastischem Element und vorderem Ende des Gewindeteils - und Orientierung zu bringen. Außerdem kann er die Vorzentrierung des Gegengewindes bei der Vormontage unterstützen. Der Trägerteil kann - muß sich aber nicht unbedingt - vor dem vorderen Ende des Gewindeabschnitts befinden und kann in der Größe im Einzelfall auf einen sehr kleinen Teil am Übergang zum federnd wirksamen elastischen Element reduziert sein.

Befestigungselement, Trägerteil und elastisches Element können grundsätzlich aus einem Stück oder verschiedenen Stücken und unterschiedlichen Materialien gefertigt werden.

Die Herstellung von Schrauben, Muttern und anderen Befestigungselementen mit Gewinde und einem davor angeordneten Trägerteil mit einem elastischen Element in einstückiger Ausführung bereitet keine Schwierigkeiten, wenn sie z. B. im Spritzgießverfahren aus einem ausreichend elastischen Kunststoff erfolgt. Die meisten in der Industrie und Installationstechnik verwendeten Befestigungselemente mit Gewinde bestehen jedoch aus Metall, insbesondere Stahl und Messing. Es kann die Großserienfertigung von Schrauben und Muttern aus diesen Materialien außerordentlich komplizieren, wenn man sie einstückig mit einem elastischen Element produzierte. Bestehen Befestigungselement und elastisches Element aus verschiedenen Stücken, wird es notwendig, diese zu verbinden. Hier ist es erwünscht, die möglicherweise wieder lösbare Verbindung herstellungstechnisch einfach und kostengünstig zu realisieren.

Ein weiteres Problem ist die Lösbarkeit vormontierter oder fertig montierter Schraubverbindungen, wenn das elastische Element im vormontierten Zustand an dem mit ihm in Eingriff gebrachten gegenüberliegenden Bauteil oder Befestigungselement nicht nur reibend, sondern z. B. zuverlässig formschlüssig verrastet halten soll. Dann lassen sich die Teile oft nicht mehr zerstörungsfrei demontieren.

Um auch die vorstehend genannten Probleme zu lösen, schlägt die Erfindung weiter vor, daß der Gewindeteil einerseits und ein Trägerteil mit elastischem Element andererseits wenigstens zwei getrennte, miteinander verbindbare Teile sind. Diese bevorzugte Ausführung hat mehrere Vorteile. Durch geeignete Ausgestaltung des Tägerteils bietet sie die Möglichkeit, die Verbindung mit dem Befestigungselement einfach und kostengünstig zu realisieren. Weiterhin gestattet sie bei Bedarf das zerstörungsfreie Trennen des Trägerteils zusammen mit dem elastischen Element von dem Gewindeteil, z. B. dann, wenn der vormontierte Zustand rückgängig gemacht oder die Gewindeverbindung wieder gelöst werden soll. Außerdem bietet sie die Möglichkeit, jeweils optimal geeignete, unterschiedliche Materialien für den Gewindeteil und das elastische Element zu verwenden. So kann z. B. ein Gewindebolzen oder eine Stahlschraube hoher Tragfähigkeit und großer Härte mit einem Trägerteil und elastischen Element aus Kunststoff mit bestmöglichen Federeigenschaften kombiniert werden. Darüber hinaus lassen sich die Fertigungskosten senken, weil die Gewindebolzen, Schrauben, Muttern und sonstigen Teile mit Gewindebohrungen in bewährter, herkömmlicher Großserien-Produktionstechnik und die Trägerteile mit den elastischen Elementen z. B. als Spritzgußteile gefertigt werden können. Die Verbindung beider Arten von Teile läßt sich in einem automatisierten Fügevorgang durchführen, kann aber auch dem Anwender überlassen bleiben, der bei genormten, zueinander passenden Sitzflächen einerseits am Gewindeteil und andererseits am Trägerteil dann sogar die Möglichkeit hat, je nach Montagesituation ein bestimmtes Gewindeteil mit unterschiedlichen elastischen Elementen zu kombinieren.

Wegen der vorstehend genannten zahlreichen Vorteile wird angenommen, daß sich die zwei- bzw. mehrteilige Ausführungsform, bei welcher das elastische Element mittels Trägerteil mit dem Befestigungselement verbunden wird, für den Normalbedarf in der Praxis durchsetzen wird. Selbst bei Befestigungselementen aus Kunststoff kann es sich empfehlen, für den Gewindeteil und für den Trägerteil mit dem elastischen Element der jeweiligen Funktion angepaßte Materialien zu verwenden, d.h. zwei Teile zu produzieren, die anschließend miteinander verbunden werden.

Für die Verbindung zwischen Gewindeteil und Trägerteil eignen sich grundsätzlich alle bekannten Fügeverfahren, also z. B. Schweißen, Löten, Kleben Verpressen, Quetschen, Aufschrumpfen, Verrasten oder Schrauben. Gemäß einem weiteren vorteilhaften Vorschlag der Erfindung kann der Bereich des Trägerteils, welcher zur Verbindung mit einem stiftförmigen Befestigungselement dient, als Hohlraum ausgestaltet sein und zum Beispiel ein Innengewinde, Rastmittel o. dgl. beinhalten. Der hierzu korrespondierende Aufnahmebereich des stiftförmigen Befestigungselements ist dann passend zu diesem Hohlraum - z. B. bolzenförmig oder als zapfenförmiger Vorsprung - ausgestaltet und kann korrespondierende Rastmittel, Außengewinde o. dgl. tragen. Ein solcher z. B. bolzenförmiger oder als zapfenförmiger Vorsprung ausgebildeter Aufnahmebereich kann mit großem Vorteil einschließlich daran befindlichem Außengewinde, Nut o. dgl. z. B. durch Kaltwalzen von Stahl oder aus einem anderen umformbaren Material hergestellt werden. Dies bedeutet, daß bei der Herstellung eines stiftförmigen Befestigungselements keine zusätzlichen Arbeitsschritte zur Herstellung des Ausnahmebereichs für das Trägerteils anfallen müssen, da lediglich eine Modifizierung der verwendeten Matrizen ausreichend sein kann. Auf diese Weise ausgestaltete Trägerteile bzw. am Befestigungselement befindliche Aufnahmebereiche für den Trägerteil können auf einfache Weise durch Verschrauben, Verrasten, Verkleben o. dgl. miteinander verbunden werden. Bei verschraubten oder verrasteten Verbindungen können diese - z. B. um ein Lösen der Vormontage zu ermöglichen - wieder lösbar gestaltet werden. Falls die Lösbarkeit erschwert oder vermieden werden soll, kann man bei einer Schraubverbindung gängige Schraubsicherungen wie z. B. geeignete Unterlegscheiben, Klebstoffe o. dgl. verwenden. Grundsätzlich ist es aber auch umgekehrt möglich, den Aufnahmebereich des Befestigungselements für den Trägerteil als Hohlraum zu gestalten.

Vorzugsweise, aber nicht notwendigerweise, hat ein der Verbindung mit dem Trägerteil dienendes Gewinde dieselbe Steigungsrichtung wie das Hauptgewinde des Befestigungselements.

Je nach Durchmesser wird man in den meisten Fällen bei Schrauben ein kappenförmiges Trägerteil, dessen Außendurchmesser etwas kleiner als der lichte Querschnitt des Gegengewindes ist, auf einem zapfenförmigen Vorsprung am vorderen Ende der Schraube befestigen. Im Falle einer Schraubverbindung ist in diesem Fall der zapfenförmige Vorsprung mit einem Außengewinde und das kappenförmige Trägerteil mit einem Innengewinde versehen. Statt auf der Mantelfläche eines zapfenförmigen Vorsprungs kann bei ausreichend großem Durchmesser der Trägerteil aber auch auf der vorderen Stirnfläche z. B. durch Kleben befestigt oder in eine Bohrung in der vorderen Stirnfläche eingerastet werden. Je nach der Befestigungsart richtet sich die Form des Trägerteils, wobei ggf. auch dessen weitere Funktion als Zentrierhilfe zu beachten ist.

Bei einer zweiteilig hergestellten Mutter oder einem anderen Bauteil mit Gewindebohrung wird der Trägerteil normalerweise die Form eines Ringes haben, der lösbar oder unlösbar in einem endseitigen Bohrungsabschnitt, z. B. durch Verschrauben, Verrasten, Verkleben o. dgl. befestigt wird. Auch hier ist jedoch im Einzelfall eine stirnseitige Anbringung des Trägerteils möglich.

Neben dem grundsätzlichen Gedanken der Kombination eines Gewindeteils für die Endmontage mit einem elastischen Element für die Vormontage und dem weiteren für Produktion und Anwendung wichtigen Vorschlag der Befestigung des elastischen Elements am Befestigungselement durch den geeignet gestalteten Trägerteil beinhaltet der Erfindungskomplex als drittes erfinderisches Merkmal die Ausgestaltung wenigstens eines Teils des elastischen Elements als Gewinde oder Gewindefragment. Ein solches Gewindefragment kann man sich gedanklich durch Entfernen von Teilen eines Gewindes vorstellen. Es erlaubt ein Verschrauben mit einem Gegengewinde und kann so gestaltet sein, daß beim Verschrauben mit dem Gegengewinde kein unnötiges Spiel entsteht. Ein Gewindefragment läßt sich z. B. in einfacher Weise dadurch realisieren, daß das elastische Element die Form mehrerer über den Umfang verteilter Federzungen hat, deren radial äußere bzw. innere Enden derart axial versetzt angeordnet sind, daß sie auf einem dem Gewinde des Gewindeteils entsprechenden Gewindegang liegen. Wiederum werden mit dieser Ausgestaltung mehrere Vorteile auf einmal erzielt. Obgleich sich nämlich ein solcherart geformtes elastisches Element bei der Vormontage sowohl verschrauben als auch durch eine axiale Einsteckbewegung in ein Gegengewinde mit diesem verrasten läßt und nur unter Aufwendung einer bestimmten axial gerichteten Kraft wieder axial herausgezogen werden könnte, bereitet das anschließende oder spätere Lösen der Verbindung nach der Endmontage durch Verschrauben der Gewindeteile keine Schwierigkeiten, weil sich auch das elastische Element zusammen mit dem Gewindeteil aus dem Gegengewinde herausschrauben läßt. Eine Einrichtung mit solchen Eigenschaften kann im allgemeinen als verschraubbarer Steckbereich bezeichnet werden. Durch geeignete Ausgestaltung des elastischen Elements - z. B. durch Anwinkeln der Federzungen in Montagerichtung - kann das Aufstecken erleichtert und das Herausziehen erschwer werden. Zusätzlich kann ein derartig gestaltetes elastisches Element das Gegengewinde reibend, z. B. durch eine radiale Federkraft festhalten.

Der weitere durch die Erfindung erzielte Vorteil besteht darin, daß das ansonsten der Vormontage und Zentrierung dienende elastische Element zur Tragfähigkeit der Gewindeverbindung im fertig montierten Zustand beitragen kann. Dies wiederum bietet die Möglichkeit, einen Teil der Gewindegänge des Hauptgewindes durch das gewindeförmige oder teilgewindeförmige elastische Element zu ersetzen, mit dem Vorteil, daß dieser evtl. sogar größere Teil des Gewindes am Anfang des Montagevorgangs nur axial in oder auf das Gegengewinde geschoben zu werden braucht und anschließend nur noch wenige Umdrehungen von Hand oder mittels eines Werkzeugs erforderlich sind, um die Schraubverbindung festzuziehen.

Nachstehend werden einige Ausführungsbeispiele der Erfindung anhand der Zeichnung näher erläutert. Es zeigen:
- Fig. 1a, 1b,1c: eine Schraube mit einem an ihrem vorderen Ende angebrachten elastischen Element in drei Stadien der Verbindung mit einer Mutter;
- Fig. 2a, 2b, 2c: eine Schraube mit einem elastischen Element in drei Stadien der Verbindung mit einem Bauteil mit einer Gewindebohrung;
- Fig. 3a, 3b, 3c: eine Mutter mit einem elastischen Element in drei verschiedenen Stadien der Verbindung mit einer Schraube;
- Fig. 4: eine Mutter nach Fig. 3a, b, c in grösserem Maßstab und anderer Perspektive;
- Fig. 5: das vordere Ende einer Schraube mit einem anders nach Fig. 1a, b, c geformten elastischen Element;
- Fig. 6a, 6b: perspektivische Ansichten einer aus zwei Teilen gefertigten Schraube mit einem elastischen Element vor und nach dessen Verbindung mit dem Gewindeteil der Schraube durch Verrasten;
- Fig. 7a, 7b: Darstellungen ähnlich Fig. 6a, b einer zweiteiligen Schraube mit einem durch Verschrauben zu verbindenden elastischen Element;
- Fig. 8: eine perspektivische Ansicht einer Mutter mit zugeordneter Schraube, an deren vorderen Ende ein Trägerteil mit einem elastischen Element in Form mehrerer Federzungen anzubringen ist, deren radial äußere Enden auf der Schraubenlinie des Gewindegangs der Schraube liegen;
- Fig. 9: eine Ansicht entsprechend Fig. 8 einer abgewandelten Ausführungsform mit anders gestalteten Federzungen;
- Fig. 10: eine perspektivische Darstellung einer Mutter mit einem zylindrischen endseitigen Bohrungsabschnitt, in den ein schematisch dargestellter ringförmiger Trägerteil mit radial nach einwärts ragenden Federzungen einsetzbar ist, deren freie Enden auf der Schraubenlinie des Muttergewindes liegen.

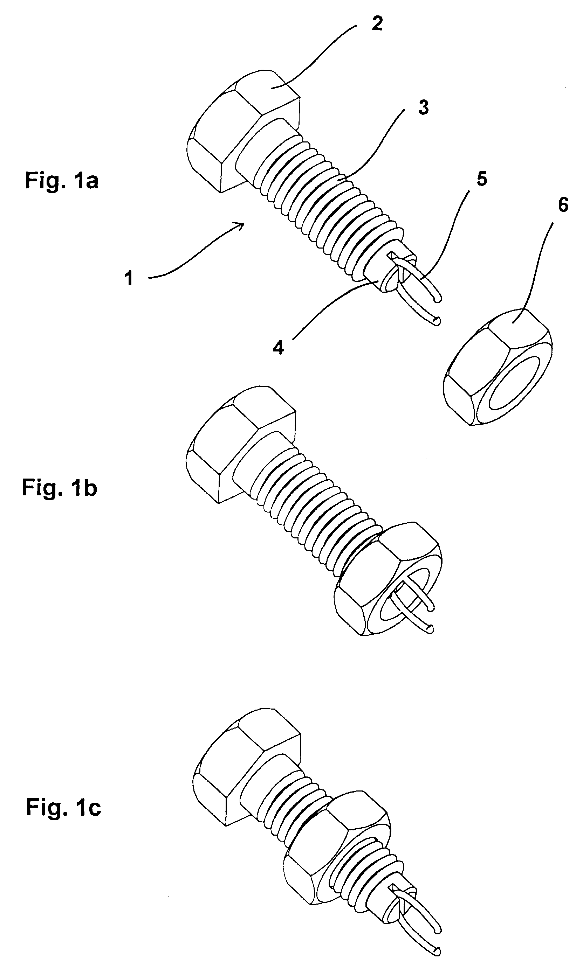

Die in Fig. 1a schematisch dargestellte Schraube 1 hat einen Sechskantkopf 2 und einen Gewindeteil 3. An ihrem vorderen Ende ist an einem Trägerteil 4 ein als gebogener Federdraht ausgebildetes elastisches Element 5 angebracht, beispielsweise durch Kleben, Löten, Schweißen, Verklemmen, seitliches Hineinschieben und mechanische Versperrung in axialer Richtung oder in anderer geeigneter Weise. Der Federdraht 5 bildet einen Bügel mit Federzungen, die, ausgehend von ihrer Befestigungsstelle, so gebogen sind, daß ihre vorderen, freien Enden ohne weiteres in die Gewindebohrung der mit 6 bezeichneten zugehörigen Mutter einführbar sind, aber im entspannten Zustand des das elastische Element bildenden Federdrahts 5 die radial äußersten Punkte der zwischen den vorderen Enden und der Befestigungsstelle radial ausgewölbten Federzungen auf einem Radius liegen, der größer ist als der lichte Querschnitt der Gewindebohrung der Mutter 6.

Zur Vormontage braucht nur der Federdraht 5 soweit in die Mutter 6 eingeführt und dabei radial zusammengedrückt zu werden, daß er die Schraube 1 relativ zur Mutter 6 im vormontierten Zustand hält. Dies kann beispielsweise durch Reibung oder Verrasten mit den Gewindegängen der Mutter 6 realisiert werden. Ebenfalls ist es möglich, daß sich die Federzungen nach Hindurchführen ihrer äußersten Bereiche durch die Mutter wieder aufspreizen und die Muttter so axial gegen das Schraubengewinde drücken. Der vormontierte Zustand ist in Fig. 1b gezeigt. Ebenso wie diese Verbindung durch einfaches Aufstecken der Mutter oder Einstecken der Schraube erzeugt worden ist, läßt sie sich, ausgehend von der Stellung nach Fig. 1b, auch wieder durch einfaches Auseinanderziehen der Teile lösen. Andererseits kann aber auch, ausgehend von der Stellung nach Fig. 1b, mit dem Schraubvorgang begonnen werden, wie dies in Fig. 1c dargestellt ist, um den Endzustand der Montage herzustellen. Der Beginn der Schraubbewegung wird dadurch erleichtert, daß der Durchmesser des Trägerteils 4 passend zum lichten Querschnitt der Gewindebohrung der Mutter 6 gewählt ist, also die beiden Teile zentriert.

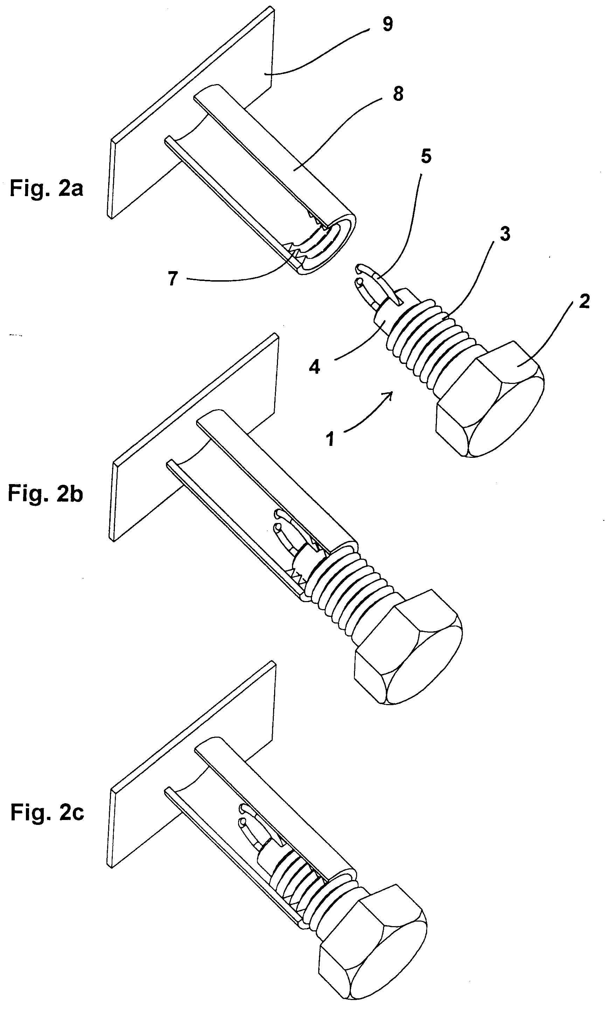

Das Ausführungsbeispiel nach Fig. 2a, b, c zeigt, daß das elastische Element 5 nicht nur in solchen Fällen, wie bei einer Mutter, durch die es evtl. schon im vormontierten Zustand hindurchragt, geeignet ist, die zu verbindenden Teile vorläufig zu halten, sondern auch dann, wenn z. B. das Gegengewinde 7 in einer längeren Gewindehülse 8 an einem Bauteil 9 ausgebildet ist. Auch hier kann die Vormontage durch Reibung oder Verrasten der Federzungen im Gewinde der Gewindehülse oder durch Aufspreizen der Feder nach Hindurchführen ihrer äußersten Bereiche durch das Gewinde erfolgen. Ebenso kann ein Halt durch Reibung oder Verrasten der Feder an der Mantelwand im Anschluß an das Gewinde erfolgen. Von besonderer Bedeutung ist die Ausgestaltung der Gewindehülse 8 als Dübel.

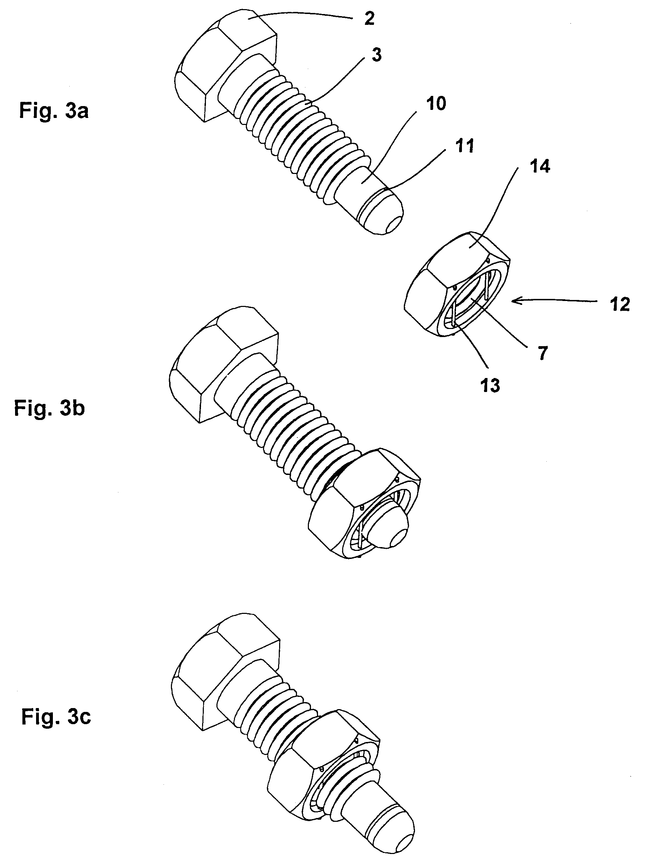

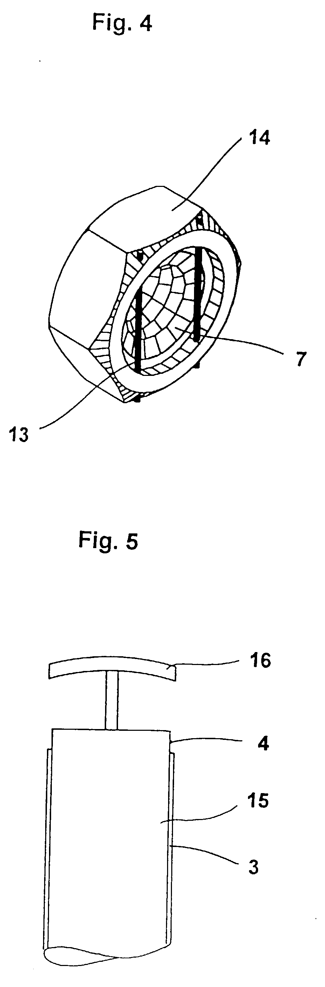

Fig. 3a, b, c und Fig. 4 zeigen ein Befestigungselement in Form einer Mutter 12 mit Innengewinde 7 und äußeren Sechskantflächen 14. An einem oder, wie im Beispielsfall, an beiden axialen Enden sind jeweils vor dem Gewindeteil 7 in einem gewindefreien, schmalen, ringförmigen Trägerteil zwei Stücke Federdraht 13 in paralleler Lage zueinander derart in den Mutternkörper eingesetzt, daß sie wie Sehnen die Gewindebohrung schneiden. Der Abstand zwischen den paarweise parallelen Federdrähten 13 ist so gewählt, daß er etwas kleiner ist als der Außendurchmesser des Gewindeteils 3 der zugehörigen Schraube. Er kann sogar kleiner sein als der Kerndurchmesser des Gewindeteils und mit einer Ringnut 11 in einem vor dem Gewindeteil 3 der Schraube angeordneten zapfenförmigen Vorsprung 10 zusammenwirken, dessen Durchmesser etwa dem Kerndurchmesser der Schraube entspricht. Bei der Montage läßt sich dann zunächst der zapfenförmige Vorsprung 10 der Schraube durch einfaches axiales Einstecken in die Mutter 12 mit den an dieser angebrachten Federdrähten 13 in Eingriff bringen. Der Halt kann durch Reibung der Federdrähte am zapfenförmigen Vorsprung 10 oder durch Einrasten in die Ringnut 11 erfolgen. Fig. 3b zeigt die Teile in dieser vormontierten Stellung, in der sie schon nicht mehr auseinanderfallen können, weil sie durch die elastische Rückstellkraft der Federdrähte 13 zusammengehalten werden. Anschließend kann umgegriffen und der Gewindeteil 3 der Schraube mit dem Innengewinde 7 der Mutter gemäß Fig. 3c in Schraubeingriff gebracht werden.

Wenn die Mutter 12 nur an einem Ende mit Federdrähten 13 oder einem anderen elastischen Element versehen ist, wird die angestrebte Vormontagefunktion auch dann erreicht, wenn sich das elastische Element 13 gemäß Fig. 3a mit Bezug auf die Schraube am hinteren Ende der Mutter 12 befindet. Dies setzt allerdings einen verhältnismäßig langen zapfenförmigen Vorsprung 10 voraus, der sich in der vormontierten Stellung nach Fig. 3b auf ganzer axialer Länge durch die Mutter hindurch erstrecken muß. Es ist deshalb vorzuziehen, eine nur an einem Ende mit einem elastischen Element 13 versehene Mutter 12 so einzusetzen, daß sie mit der Seite, auf der sich das elastische Element 13 befindet, zur Schraube hin weist. Dann kommt man mit einem wesentlich kürzeren zapfenförmigen Vorsprung 10 aus oder dieser kann ganz entfallen.

In Fig. 5 ist eine im Vergleich zu Fig. 1 und 2 abgewandelte Ausführungsform des elastischen Elements dargestellt. Es besteht aus einem von dem vor dem Gewindeteil 3 eines Gewindebolzens 15 angeordneten Trägerteil 4 in zentraler Lage axial vorspringenden Schaft, an dessen vorderem Ende ein elastischer Quersteg 16 angebracht ist. Er kann von vorneherein von der Mitte aus leicht nach hinten gebogen oder angewinkelt sein und auch mehr als nur zwei Schenkel bzw. Federzungen haben. Ein solches elastisches Element kann beim axialen Einstecken in eine Gewindebohrung eine eingerastete, in Gegenrichtung sehr fest haltende Vormontagestellung bewirken. Bei ausreichender Länge des axialen Schafts kann sich der Quersteg nach Hindurchführen des Gewindes wieder ausdehnen und beispielsweise einer Mutter oder Gewindehülse nach Fig. 2a, b, c den Rückweg versperren. Bei Anwinkelung der Schenkel in Montagerichtung führt ein Druck der vormontierten Mutter gegen die Schenkel dann sogar zur Vergrößerung der Schenkelaußendurchmesser, d. h. das elastische Element 6 wirkt wie ein Widerhaken.

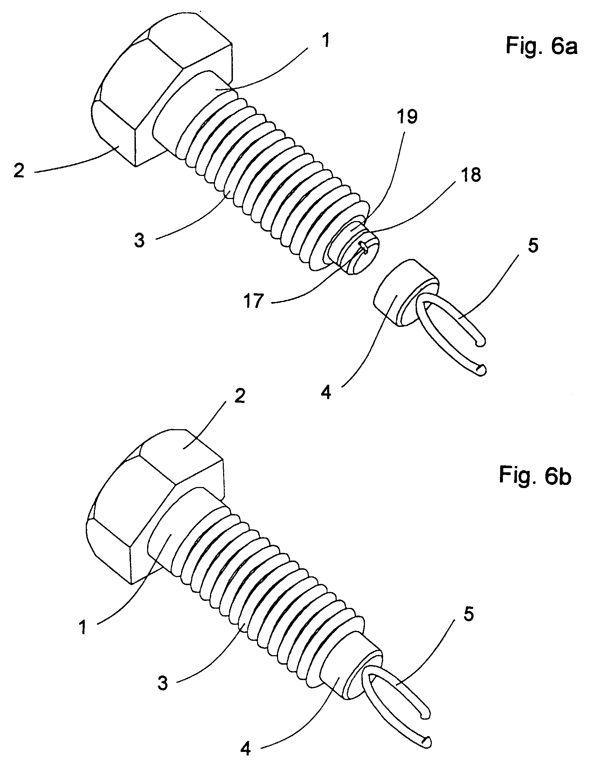

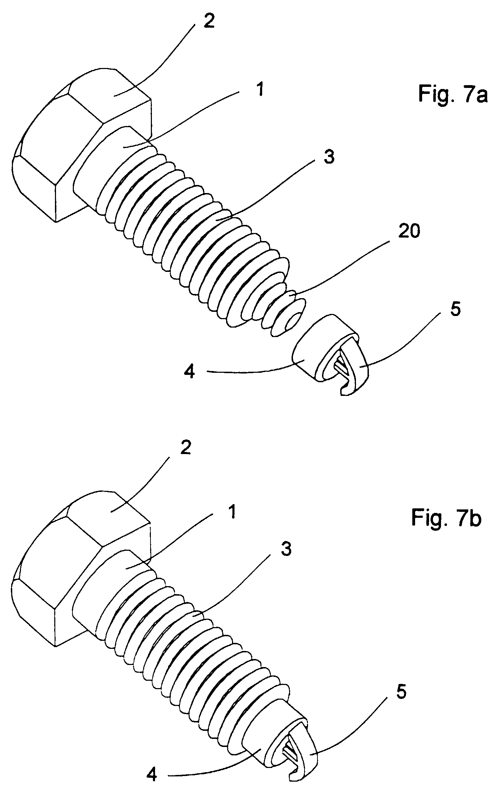

Bei den in Fig. 6a, b, und 7a, b gezeigten Schrauben kann das elastische Element 5 mittels eines Trägerteils 4 mit dem Befestigungselement 1 verbunden werden. Der hintere Teil der Schrauben mit Sechskantkopf 2 und Gewindeteil 3 ist mit Fig. 1a identisch. Vor dem Gewindeteil 3 befindet sich jedoch bei der Ausführung nach Fig. 6a, b ein mit einer axialen Nut 17 und einer Ringnut 18 versehener zapfenförmiger Vorsprung 19, dessen Durchmesser so klein ist, daß ein darauf aufgesetzter, kappenförmiger Trägerteil 4 einen Durchmesser haben kann, der höchstens etwa so groß ist wie der Kerndurchmesser des Gewindeteils 3. Der Trägerteil 4 ist im Ausführungsbeispiel einstückig mit einem daran angeformten elastischen Element 5 als Spritzgußteil aus elastischem Kunststoff hergestellt, während die Schraube 1 z. B. aus Stahl besteht. Die innere Mantelwand des kappenförmigen Trägerteils 4 ist mit einer zur Ringnut 18 passenden und axial entsprechend angeordneten Ringrippe sowie außerdem mit einem zur axialen Nut 17 passenden inneren Vorsprung geformt. Wenn der kappenförmige Trägerteil 4 auf den zapfenförmigen Vorsprung 19 der Schraube 1 aufgesetzt wird, rastet die nicht gezeigte Ringrippe in die Ringnut 18 ein und der ebenfalls nicht gezeigte innere Vorsprung kommt mit der axialen Nut 17 zum Eingriff. Dadurch wird der Trägerteil 4 axial fest und undrehbar auf dem vorderen Ende der Schraube 1 festgelegt. Anstelle der axialen Nut 17 kann jedoch auch jede andere Abweichung des zapfenförmigen Vorsprungs 19 von der Rotationssymmetrie ein Verdrehen des Trägerteils verhindern, sofern dessen Hohlraum an die äussere Form des zapfenförmigen Vorsprungs entsprechend angepaßt ist. Es versteht sich, daß auch umgekehrt eine Ringnut und eine axiale Nut in der inneren Mantelwand des kappenförmigen Trägerteils 4 geformt sein könnten, mit denen eine entsprechende Ringrippe und ein Vorsprung am zapfenförmigen vorderen Ende der Schraube 1 in Eingriff zu bringen sind. Durch Variation der Kappenform, z. B. durch die Verwendung von Schlitzen, kann die Elastizität der Kappe beeinflußt werden. Durch weitere Maßnahmen, beispielsweise die Ausgestaltung des Profils der Ringnut 18 und der dazu passenden Ringrippe, kann das Lösen des Trägerteils 4 von der Schraube 1 wahlweise erschwert oder erleichtert werden. Außerdem können die Außenkante des zapfenförmigen Vorsprungs 19 und/oder die hintere Innenkante des Trägerteils 4 oder dessen äußere Vorderkante angeschrägt sein, um das Zusammenfügen der Schraube 1 mit dem Trägerteil 4 und dessen Einführen in eine Gewindebohrung zu Beginn des Montagevorgangs zu erleichtern.

Bei der in Fig. 6a, b gezeigten Bügelform des elastischen Elements 5 kann nach der Endmontage die Schraubverbindung durch axiales Ziehen oder Zusammendrücken der Federzungen zerstörungsfrei wieder gelöst werden. Wenn ein verrastendes oder verhakendes elastisches Element 5, z. B. gemäß Fig. 5 oder 7a, b zum Einsatz kommt, wird es sich normalerweise empfehlen, die Elastizität des kappenförmigen Trägerteils 4 sowie die Tiefe und Form der Ringnut 18 sowie der entsprechenden Ringrippe so zu wählen, daß sich der Trägerteil 4 zum Lösen der Schraubverbindung zerstörungsfrei vom vorderen Ende der Schraube 1 abziehen läßt.

Das Ausführungsbeispiel nach Fig. 7a, b unterscheidet sich dadurch von der Ausführungsform nach Fig. 6a, b, daß das elastische Element 5 die auch in Fig. 5 gezeigte, verrastende Form hat und daß das abgesetzte, verjüngte vorderste Ende der Schraube 1, welches dem zylindrischen, zapfenförmigen Vorsprung 19 entspricht, mit einem Außengewinde 20 versehen ist, das mit einem entsprechenden Innengewinde im kappenförmigen Trägerteil 4 zusammenwirkt. Die beiden Teile können also ohne weiteres durch Verschrauben miteinander verbunden werden, und diese Verbindung kann bei Bedarf, z. B. bei einer späteren Demontage der Gewindeverbindung, wieder gelöst werden. Falls gewünscht, kann aber auch das Ablösen des Trägerteils 4 mittels eines Querstifts, geeigneter Unterlegscheiben, Klebstoff oder einer anderen Schraubensicherung verhindert werden.

Es versteht sich, daß das elastische Element 5 viele verschiedene Formen, z. B. mehr als zwei Federzungen oder federnde Bügel haben kann. Es kann auch einstückig mit dem Trägerteil 4 aus entsprechend gebogenem Federdraht bestehen, der z. B. im Bereich des Trägerteils 4 wie eine Schraubenfeder gewickelt und ebenfalls mit diesem Teil auf einen Zapfen 19 oder ein Außengewinde 20 aufzusetzen ist. Darüber hinaus kann das elastische Element 5 und sein Trägerteil 4 z. B. aus Gummi, Silicon oder Schaumgummi bestehen.

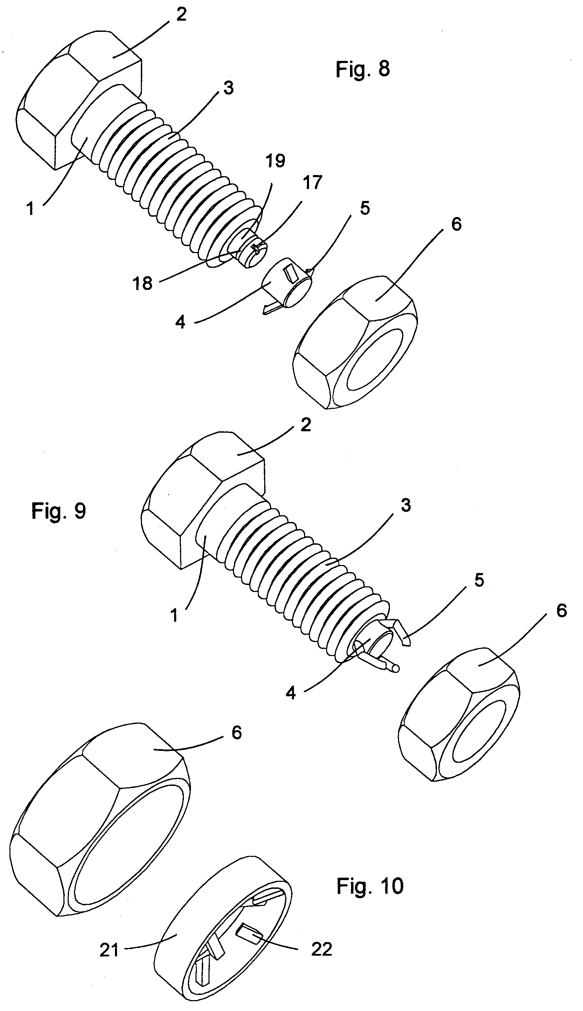

Das in Fig. 8 dargestellte Ausführungsbeispiel zeigt eine Schraube 1, die einstückig oder, wie gezeigt, mit einem getrennt gefertigten Trägerteil 4 mit einem elastischen Element 5 hergestellt sein kann. Die Besonderheit gegenüber den vorstehend genannten Ausführungsvarianten besteht darin, daß die radial äußeren Enden der über den Umfang verteilten, schräg nach hinten gerichteten Federzungen 5 derart axial versetzt sind, daß sie im vormontierten Zustand auf einer Schraubenlinie liegen, die eine Fortsetzung des Gewindegangs des Gewindeteils 3 bildet. Die Außenbereiche der Federzungen 5 stellen ein Gewindefragment dar, dessen Teile radial und in Richtung axial von vorn nach hinten derart nachgiebig sind, daß sie wahlweise ein axiales Einschieben oder schraubendes Eindrehen in das Innengewinde der zugehörigen Mutter 6 bzw. ein anderes Gegengewinde gestatten. Sie lassen sich auch wieder aus diesem Gewinde herausschrauben. Die Anzahl der Gewindefragmentgänge kann je nach Ausführungsform variiert werden. Bei mehreren Gewindefragmentgängen können die Federzungen benachbarter Gewindefragmentgänge auf Lücke stehen, um so beim elastischen Verformen in diese Lücke ausweichen zu können. Durch das Anschrägen der Federzungen in Montagerichtung wird ein Aufstecken eines Gegengewindes erleichtert, während eine axiale Bewegung in Gegenrichtung erschwert wird. Wird der Aussendurchmesser des Gewindefragments gegenüber dem Durchmesser des Gewindeteils 3 verringert, kann das Aufstecken eines Gegengewindes erleichtert werden, da die zum Aufstecken notwendige elastische Verformung des Gewindefragments geringer ausfallen kann. Beispielsweise durch Vergrößerung der Federzungen-Außendurchmessers über den Durchmesser des Gewindeteils 3 hinaus kann auch ein Verschrauben des Innengewindes entlang der Federzungen durch Reibung erschwert werden. Auf diese Weise kann ein unbeabsichtigtes Lösen der Vormontage durch Schrauben verhindert werden.

Ein Vergleich der Fig. 9 mit der Fig. 8 zeigt, daß die Federzungen 5 auch eine den Bügeln der Ausführung nach Fig. 6a, b nahekommende Form haben können. In diesem Fall haben sie statt radial nach außen gewölbter Rundungen radial nach außen weisende Knicke oder ein anderes Gewindefragment, und die radial äußersten Punkte der Knicke der Federzungen 5 liegen auf einer Schraubenlinie, so daß sie ebenfalls wahlweise in das Innengewinde der Mutter 6 axial eingeschoben oder schraubend eingedreht werden können.

Fig. 10 illustriert die Anwendung des in den Ausführungsbeispielen nach Fig. 8 und 9 zum Ausdruck kommenden Gedankens auf ein Befestigungselement mit Innengewinde. In diesem Fall ist ein ringförmiger Trägerteil 21, dessen Außenbereich nur schematisch dargestellt ist und ein Außengewinde, Rastmittel, eine Nut o. dgl. tragen kann, in einen entsprechend aufgebohrten Endabschnitt der Gewindebohrung einer Mutter 6 einsetzbar und z. B. durch Verschrauben, Verrasten, Verkleben o. dgl. zu befestigen. Der ringförmige Trägerteil 21 enthält nach radial innen und hinten weisende Federzungen 22, welche im Prinzip den Federzungen 5 nach Fig. 8 entsprechen, deren innere Bereiche in Fig. 10 aber das Fragment eines Innengewindes bilden, indem die radial inneren Enden der über den Umfang verteilten Federzungen 22 derart axial versetzt sind, daß sie auf einer Schraubenlinie liegen, die eine Fortsetzung des in Fig. 10 nicht sichtbaren Schraubengangs des Innengewindes der Mutter 6 darstellt. Die Mutter mit dem eingesetzten, evtl. auch stirnseitig vorspringenden ringförmigen Trägerteil 21 kann, mit diesem voran, wahlweise auf einen passenden Gewindebolzen zunächst teilweise axial aufgeschoben und dann mit ihrem eigentlichen Gewindeteil bis in die endgültige Montagestellung aufgeschraubt werden. Sie kann aber auch von Anfang an durch eine Drehbewegung aufgeschraubt werden.

Eine Demontage ist jederzeit zerstörungsfrei möglich. Auch ein elastisches Element wie in Fig. 3a, b, c kann mit einem derartigen Trägerelement an der Mutter angebracht werden.

Der an der Mutter befindliche Aufnahmebereich für das Trägerelement kann auch ringförmig sein und an der Außenseite des Rings ein Gewinde, Rastmittel o. dgl. zur Aufnahme eines Trägerteils mit Innengewinde oder innen befindlichen Rastmitteln besitzen.

## Patentansprüche

1. Befestigungselement mit einem ein vorderes und ein hinteres axiales Ende aufweisenden Gewindeteil (3; 7) und wenigstens einem ein Trägerteil (4; 21) bildenden Abschnitt, an dem wenigstens ein sich radial mindestens bis in den radialen Bereich des Gewindes (3, 7) erstreckendes, elastisches Element (5, 13, 22) angebracht ist, **dadurch gekennzeichnet**, daß das elastische Element (5, 22) vor dem vorderen Ende des Gewindeteils (3; 7) angeordnet ist.

2. Befestigungselement nach Anspruch 1, **dadurch gekennzeichnet**, daß der Gewindeteil (3; 7) und der Trägerteil (4; 21) zwei getrennte, miteinander verbindbare Teile sind.

3. Befestigungselement nach Anspruch 2, **dadurch gekennzeichnet**, daß bei einem Gewindeteil (3) mit Außengewinde der Bereich zur Aufnahme des Trägerteils (4), ein zapfenförmiger Vorsprung (19) oder ein Hohlraum ist, welcher mit einem passenden Hohlraum bzw. zapfenförmigen Vorsprung am Trägerteil (4) zusammenwirkt, und bei einem Gewindeteil (7) mit Innengewinde der Bereich zur Aufnahme des Trägerteils (21) ein Hohlraum oder ringförmiger Vorsprung ist, welcher mit einem passenden ringförmigen bzw. kappenförmigen Trägerteil zusammenwirkt.

4. Befestigungselement nach Anspruch 2, **dadurch gekennzeichnet**, daß der Gewindeteil (3; 7) und der Trägerteil (4; 21) miteinander verschraubbar oder verrastbar sind.

5. Befestigungselement nach Anspruch 2, **dadurch gekennzeichnet**, daß der Trägerteil (4; 21) und das elastische Element (5; 22) einteilig ausgebildet sind.

6. Befestigungselement nach Anspruch 5, **dadurch gekennzeichnet**, daß der Trägerteil (4; 21) und das elastische Element (5; 22) aus elastischem Kunststoff bestehen.

7. Befestigungselement nach Anspruch 1, **dadurch gekennzeichnet**, daß das elastische Element (5; 22) wenigstens teilweise als Gewinde oder Gewindefragment ausgebildet ist.

8. Befestigungselement nach Anspruch 1, **dadurch gekennzeichnet**, daß das elastische Element (5; 22) mehrere über den Umfang verteilte, radial nachgiebige Federzungen aufweist.

9. Befestigungselement nach Anspruch 8, **dadurch gekennzeichnet**, daß die Federzungen in Richtung vom vorderen zum hinteren axialen Ende mit einer geringeren Steigung radial in den Gewindebereich ragen als in Richtung vom hinteren zum vorderen axialen Ende.

10. Befestigungselement nach Anspruch 8, **dadurch gekennzeichnet**, daß die Federzungen (5; 22) derart geformt sind, daß sie bei axialer Belastung von vorn leichter als bei axialer Belastung von hinten radial nachgeben.

11. Befestigungselement nach Anspruch 8, **dadurch gekennzeichnet**, daß die freien Enden oder radialen Vorsprünge der Federzungen (5; 22) derart axial versetzt angeordnet sind, daß sie auf einem dem Gewinde des Gewindeteils entsprechenen Gewindegang liegen.
